# EUROPEAN PATENT SPECIFICATION

(11) **EP 3 648 465 B1**
(45) Date of publication and mention of the grant of the patent: **15.09.2021**
(21) Application number: 18203234.2
(22) Date of filing: 30.10.2018
(51) Int. Cl.: H04N 21/2362, H04N 21/262, H04N 21/434

(54) **A METHOD FOR GENERATING A UNIQUE EVENT IDENTIFIER FOR AN EPG EVENT**
EIN VERFAHREN ZUR ERZEUGUNG EINER EINDEUTIGEN EREIGNISKENNUNG FÜR EIN EREIGNIS EINES ELEKTRONISCHEN PROGRAMMFÜHRERS
PROCÉDÉ POUR GÉNÉRER UN IDENTIFIANT D'ÉVÉNEMENT UNIQUE POUR UN ÉVÉNEMENT DU GUIDE DE PROGRAMME ÉLECTRONIQUE

(43) Date of publication of application: 06.05.2020
(73) Proprietor: Advanced Digital Broadcast S.A., 1293 Bellevue (CH)
(72) Inventor: Polak, Michal, 65-119 Zielona Gora (PL)
(74) Representative: Kancelaria Eupatent.pl Sp. z.o.o

(56) References cited:
- WO-A1-2014/121818
- US-A1- 2002 059 636
- US-A1- 2010 088 734

## Description

### TECHNICAL FIELD

The present disclosure relates to a method for generating a unique event identifier for an event in an electronic programme guide.

### BACKGROUND

With the development of modern audio/video technologies, users of digital television systems can instantly access large amount of content at any given time from various sources.

A well-known method of presenting available content is a grid-type electronic programme guide (EPG) or an interactive program guide (IPG), which typically has a timeline along its X axis and lists available channels on a Y axis, wherein programmes (events) available at a particular channel at a particular time i.e. current and future events as well as events in the past (catch-up events) are presented in cells within the grid. In some systems, particularly DVB-compliant (Digital Video Broadcasting) systems, such events are identified by a 16-bit number (an event ID) in a context of a given service. Existing EPG engines, for example present on devices such as Set-Top-Boxes, may be strictly depended on the size of the EPG event ID. On the other hand, some non-DVB-compliant EPG head-ends expose EPG data in arbitrary ways, in particular meaning the size of the event ID is longer than 16 bits. Furthermore, EPG head-ends update EPG data periodically, for example every 2 hours or on a daily basis, however it is not guaranteed that a given event ID is preserved (while other metadata such as a start time, duration or a title of an event remain unaltered). This entails that such event ID may not be used to identify the event in applications that require fixed event IDs regardless of the EPG database update, for example a list of favourite events (also for past/catch-up events), event reminders or recordings.

Usually, when a typical DVB-compliant EPG engine is to operate on EPG data with events IDs longer than 16 bits, the EPG engine has to be refactored or rewritten to support, for example, 32 or 64-bit numbers identifying the events. Another approach is to address an event by a textual identifier. In both cases, serious changes to the EPG engine code must be applied, which usually may result in decline of quality and sometimes also in a performance drop of the altered EPG engine.

Similarly, in order to ensure that the event IDs remain unchanged after the EPG database update, it may be required to introduce additional software modules (proxies) that map between a fixed unique event ID and the event metadata (for example its start time and duration). Such an approach means that additional resources, such as memory to store the map and CPU time to manage the map, need to be provided. Furthermore, the map must be stored in a non-volatile memory to allow correct mapping after restarting the EPG engine, for example because of switching the STB into the standby passive mode and - after some time - switching it back into the operational mode.

Therefore, there is a need to provide a method for generating a unique ID for an EPG event, in a way to enable EPG engines supporting only 16-bit event IDs to operate on EPG database events having longer IDs or being non-numerical data type IDs.

### SUMMARY

There is disclosed herein a method for generating a unique event identifier (ID) for an event in an electronic program guide to specify a starting date and time of the event, according to the appended claims.

There is also disclosed a computer program comprising program code means for performing all the steps of the computer-implemented method as described herein when said program is run on a computer, as well as a computer readable medium storing computer-executable instructions performing all the steps of the computer-implemented method as described herein when executed on a computer.

There is also disclosed a digital television receiver comprising an EPG engine configured to read 16-bit event identifiers and to retrieve an event date and time from an event identifier (ID) according to the method as described herein.

### BRIEF DESCRIPTION OF DRAWINGS

The method presented herein is presented by means of example embodiments on a drawing, wherein:
Fig. 1 presents an example of a multimedia system retrieving EPG data from different sources;
Fig. 2 presents steps of a method for generating an event ID;
Fig. 3A-3B present a flowchart of a method for retrieving event date and start time.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DETAILED DESCRIPTION

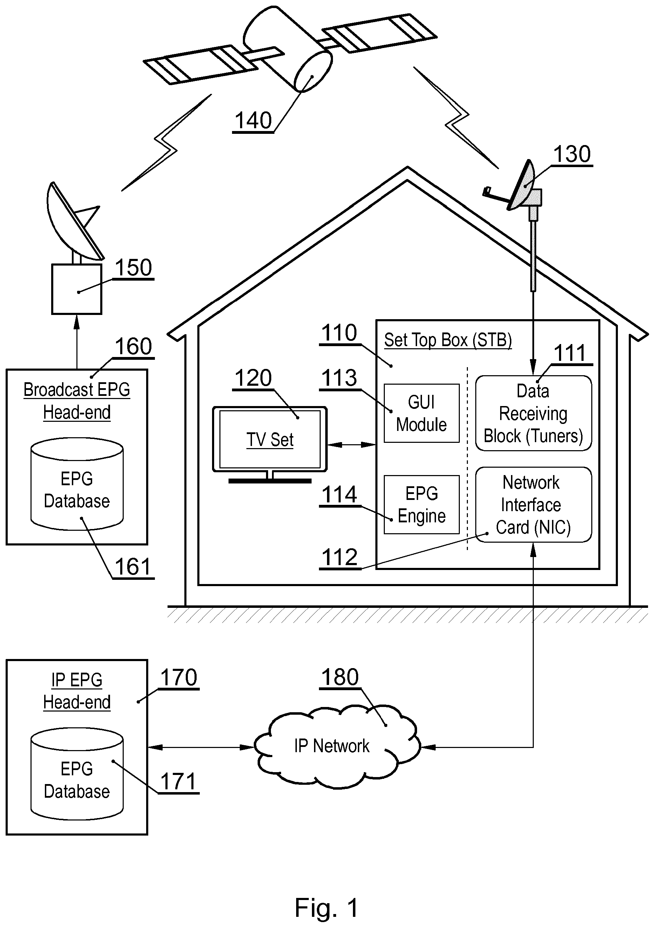

Fig. 1 presents an example of a multimedia system that retrieves EPG data from different sources. EPG engines running on multimedia devices retrieve EPG data (events) from external EPG database/head-ends through various channels, for example by means of satellite, cable, terrestrial or IP distribution channels. Some of them may be unidirectional (EPG data retrieved in carousel - push mode), while other may be bi-directional (a multimedia device requests for a subset of EPG data that is needed at a moment - pull mode).

The system presented in Fig. 1 comprises a Set Top Box (STB) 110, connected to a TV set 120. The STB comprises a GUI module responsible for generating a graphical user interface, a data receiving block 111 configured to receive downstream data, such as video content, from the broadcasting distribution network. The data receiving block 111 (also called a front-end block) may comprise a plurality of tuners (such as satellite, cable, terrestrial or IPTV tuners), wherein one of the tuners receives content to be displayed at the television screen to which the STB is directly connected (e.g. the STB 110 connected to the TV set 120) and another tuner receives content for example to be recorded at the HDD for later use. In the presented example the data receiving block 111 receives downstream data from a satellite 140 by means of a satellite dish 130. The downstream data also comprises EPG data (events) which is transmitted to the satellite 140 from a broadcast EPG head-end 160 by means of another satellite dish (uplink) 150. The EPG data to be broadcasted is retrieved from an EPG database 161. The STB 110 also comprises a network interface card (NIC) 112 configured to communicate, via at least one transmission channel, with the Ethernet (IP) network 180 or the wireless network, in order to receive EPG data, applications and/or content recommendation data, as well as to transmit user or STB statistic data. The EPG data is received from an IP EPG data head-end 170, in which it is stored in an EPG database 171.

The EPG database comprises events for a number of services (channels). In DVB-compliant (Digital Video Broadcasting) EPG databases, the service is identified by a 48-bit long triplet (original network ID, transport ID, service ID), while an event belonging to the service is addressed by a 16-bit number - an event identifier (event ID). The event ID uniquely identifies the event in context of the given service, i.e. events belonging to different services may have the same event ID values.

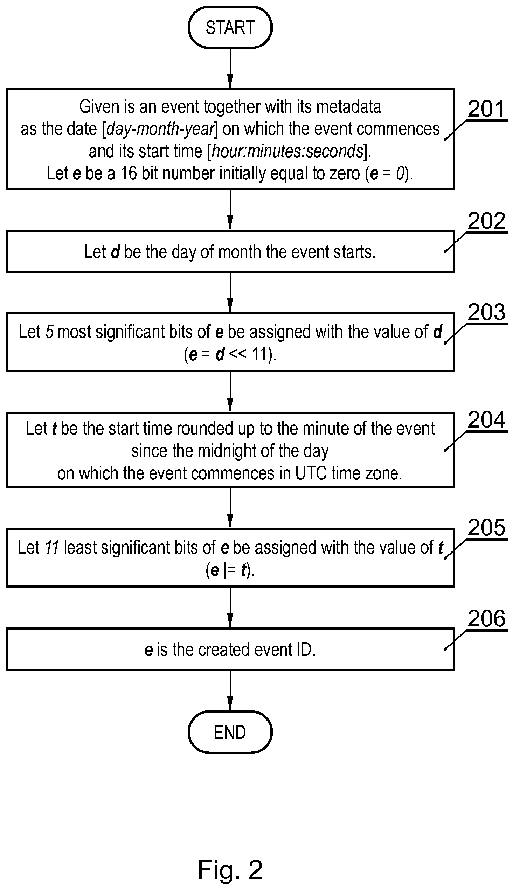

Fig. 2 presents steps of a method for generating a unique event ID. In this method the event ID is generated by the EPG database engine 114 instead of using the event ID provided by external EPG databases/head-ends. The newly generated event ID is 16 bits long and hence it can be used directly by DVB-compliant EPG engines.

In the following description, the following notations are used to indicate arithmetic and bitwise operations:
- "<< N" means shifting left by N bits (adds zeros at the right end);
- ">> N" means shifting right by N bits (adds zeros at the left end);
- "|" means a bitwise OR;
- "&" means a bitwise AND;
- "%" means a modulo (the remainder of an integer division);
- "/" means an integer quotient of a division;
- "|=" means a bitwise OR and assignment;
- "==" means equality.

First, in step 201, an event is provided together with its metadata such as a date [day-month-year] on which the event commences and its start time [hour:minutes:seconds], for example 28-08-2018, 10:00:30. The initial value of the event variable e is set to zero (e = 0).

Next, in step 202, the day of the month the event starts is assigned to a day variable (d), wherein for the date 28-08-2018, d = 28 (all numbers are decimal, if not specified otherwise by a prefix/suffix).

Next, in step 203, the 5 most significant bits of the event variable are assigned with the value of the day variable (e = d << 11, therefore for d = 28, e = 57344).

Next, in step 204, the start time of the event is assigned to a time variable (t), wherein the start time is calculated from the midnight of the day on which the event commences in UTC time zone, and is rounded to the minute. For example, for 28-08-2018T10:00:30 (date as per RFC 3339 format) t = 601.

Next, in step 205, the 11 least significant bits of the event variable are assigned with the value of the time variable: e |= t, therefore for t = 601, e = 57945 (1110001001011001b, 0xE258).

As a result, in step 206 the obtained value of the event variable is output as the event ID.

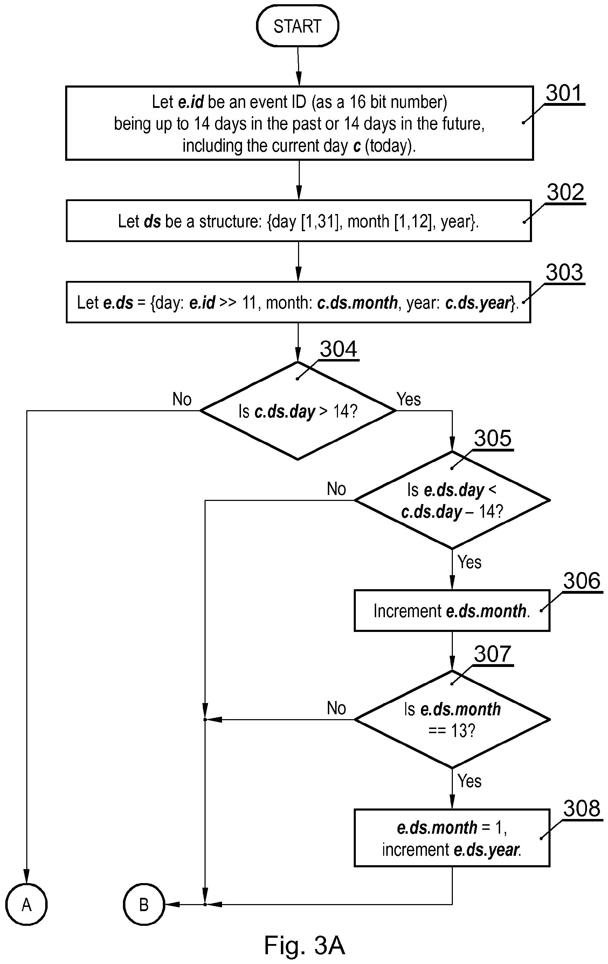

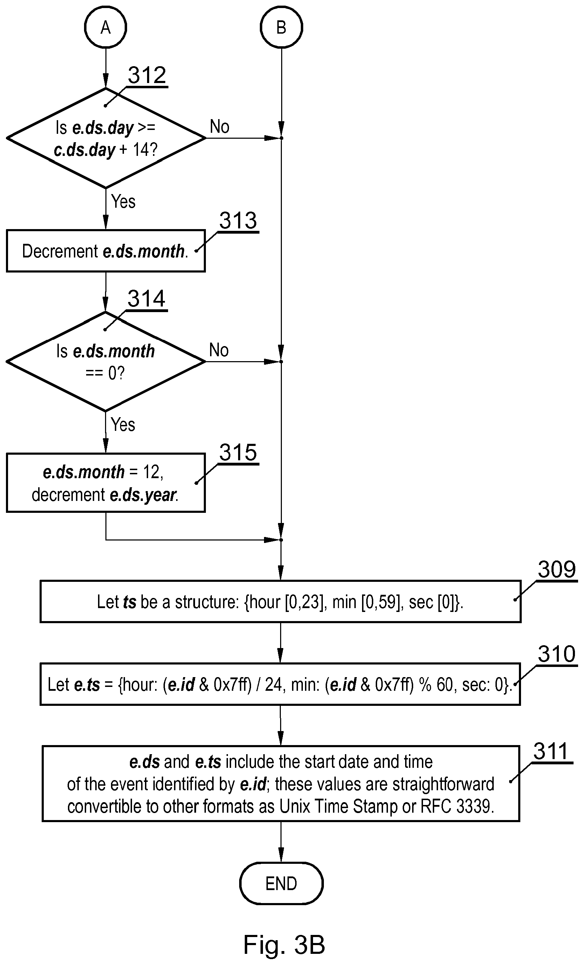

Fig. 3A-3B present a flowchart of a method for retrieving an event date and its start time from the value of the event variable of the event ID. It is assumed that the number of days in the past (p) and in the future (f) (including the current day, i.e. today) is fixed and must not exceed the value of 31, i.e. p + f <= 31. For further considerations, it is assumed that p = f = 14, which means that the EPG engine can address events for 28 days in total. Events older than 14 days are removed by the EPG engine, and similarly events beyond the next 14 days are not retrieved. Although EPG databases usually allow event start times to commence on a second basis, actually events start on a minute basis. Short events (lasting for less than a minute) could be assigned with the same event ID and hence only one of them would be seen by the EPG engine (the event ID is a unique value, so an existing event with the same event ID shall be overwritten). The maximum value of the day variable is 31, which does not exceed 5 bits. The maximum value of the time variable is 1439, which does not exceed 11 bits. The generated event ID value according to the event variable is resistant for the EPG engine restart (the event start time is assumed to be constant), so each time the device with the EPG engine is rebooted, the EPG engine shall generate the same event ID value for a particular event. This entails that such event ID may be used to identify an event on lists containing items such as favourites catch-up or future events or event reminders/recordings. Hence, no redundant metadata of the events needs to be copied onto the list. Such metadata can be retrieved directly from the EPG database.

First, in step 301, the event ID variable e.id being a 16-bit number is provided, wherein it identifies an event which is dated up to 14 days in the past or 14 days in the future, including the current day (c).

In step 302, it is defined that ds is a structure that specifies: {day [1,31], month [1,12], year}.

Next, in step 303, a value of the date variable e.ds is assigned for the event variable by specifying e.ds = {day: e.id >> 11, month: c.ds.month, year: c.ds.year}, wherein the day variable is equal to the event ID variable shifted right by 11 bits, the month variable is equal to the month of the current date, and the year variable is equal to the year of the current date.

Next in step 304 it is checked if the value of the day of the current date c.ds.day is greater than 14 (c.ds.day > 14).

If so, then in step 305 it is checked if the value of the day of the event date e.ds.day is less than the day of the current date c.ds.day minus 14 (e.ds.day < c.ds.day - 14).

If not, the procedure jumps to step 309, otherwise, in step 306 the value of the month of the event date is incremented by 1.

Next, in step 307 it is checked if the value of the month of the event date month is equal to 13 (e.ds.month == 13).

If not, then the procedure jumps to step 309, otherwise in step 308 the month of the event date is assigned to 1 (e.ds.month = 1) and the value of the year of the event date is incremented by 1.

If in step 304 the value of the day of the current date c.ds.day is lower than or equal to 14, the procedure jumps to step 312, in which it is checked if the value of day of the event date e.ds.day is greater or equal to the day of the current date c.ds.day plus 14 (e.ds.day >= c.ds.day + 14).

If not, the procedure jumps to step 309, otherwise in step 313 the month of the event date (e.ds.month) is decremented by 1.

Next, in step 314 it is checked if the value of the month of the event date is equal to 0. If not, the procedure jumps to step 309, otherwise it continues to step 315 in which the month of the event date variable is assigned to 12 and the year of the event date is decremented by 1.

In step 309, it is defined that ts is a structure: {hour [0,23], min [0,59], sec [0]}.

Next, in step 310, a value of the time variable e.ts is assigned for the event ID by specifying e.ts = {hour: (e & 0x7ff) / 60, min: (e & 0x7ff) % 60, sec: 0}. As a result, in step 310, the values of e.ds and e.ts are obtained which include the start date and time of the event identified by e.id. These values are straightforward convertible to other formats as Unix Time Stamp or RFC 3339.

The method presented herein allows EPG engines that support only 16-bit long event IDs to cooperate with event IDs which are longer numbers, or which are in other text-based formats, wherein no meaningful changes of these engines need to be introduced, what entails stable and safe source code, faster time-to-market and in general a cheaper solution than rewriting or refactoring software modules that an EPG engine is composed of. Furthermore, this method requires minimal scarce resources of a device (memory, CPU time) in comparison to a typical approach where a proxy software module responsible for mapping between a 16-bit number and other form of the event ID is added. Moreover, since the generated event ID is constant as long as the associated event exists, it can be used with applications requiring event IDs that are preserved when the device with the EPG engine is restarted (e.g. because of turning it off and subsequently turning it on). This allows to use the event IDs without additional metadata of the event with such entities like reboot-resistant event favourite list. It results in less memory usage and utilization of a simplified source code implementing a given application or feature.

Since the event ID includes both the start date and the start time of an event belonging to a given service, there is no need to issue an additional request to the database for obtaining that information. Instead, the event start date and time is directly extractable from the event ID. Therefore, in order to collect adjacent events (for example to present them to the user through a GUI) it is enough to send a single request for events neighbouring the one with the given event ID, which makes the presenting of the demanded event metadata faster.

In case when the EPG engine retrieves data from a number of EPG databases/head-ends, it may happen that events from various databases can occur more than once. By building the event IDs as described in this invention, only one event with a given event ID is possible, providing that event IDs are used as a unique key. Such an approach ensures that the same event supplied by other database shall be either rejected or it shall replace the existing one with the same event ID value.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for generating a unique ID for an EPG event may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for generating a unique event identifier (ID) for an event in an electronic program guide (EPG) to specify a starting date and time of the event, the method comprising the steps of:
- providing (201) a 16-bit event variable having an initial value of 0;
- providing (202) a day variable indicating a day of a month on which the EPG event starts;
- assigning (203) the value of the day variable to the 5 most significant bits of the event variable;
- providing (204) a time variable indicating a starting time of the event, calculated in minutes from the midnight of the day on which the event starts;
- assigning (205) the value of the time variable to the 11 least significant bits of the event variable; and
- providing the value of the event variable (e) as the event ID readable for 16-bit EPG engines.

2. A method for retrieving an event date and time from an event identifier (ID) having a form of a 16-bit variable, e.id, generated according to claim 1, wherein the event date and time is comprised within 14 days prior or past the current day, the method comprising the steps of:
- assigning a value of a date variable (e.ds) for the event ID by:
∘ specifying (303) the day of the date variable (e.ds.day) as equal to the event ID shifted right by 11 bits;
∘ specifying (306, 308, 313, 315) the month of the date variable (e.ds.month) and the year of the date variable (e.ds.year) depending on a result of a comparison (305, 312) of the day of the current date (c.ds.day) with the day of the event date (e.ds.day);
- and assigning a value of a time variable (e.ts) for the event ID by:
∘ specifying (310) the hour of the time variable as equal to ((e.id & 0x7ff) / 60), the minute of the time variable as equal to ((e.id & 0x7ff) % 60) and the second of the time variable as equal to 0, wherein "&" means a bitwise AND, "%" means a remainder of an integer division, "/" means an integer quotient of a division.

3. A computer program comprising program code means for performing all the steps of the computer-implemented method according to claim 2 when said program is run on a computer.

4. A computer readable medium storing computer-executable instructions performing all the steps of the computer-implemented method according to claim 2 when executed on a computer.

5. A digital television receiver (110) comprising an EPG engine (114) configured to read 16-bit event identifiers and to retrieve an event date and time from an event identifier (ID) according to the method of claim 2.

## Patentansprüche

1. Verfahren zum Erzeugen einer eindeutigen Ereigniskennung (ID) für ein Ereignis in einem elektronischen Programmführer (EPG), um ein Startdatum und eine Startzeit des Ereignisses zu spezifizieren, wobei das Verfahren die folgenden Schritte umfasst:
- Bereitstellen (201) einer 16-Bit-Ereignisvariablen, die einen Anfangswert von 0 aufweist;
- Bereitstellen (202) einer Tagesvariablen, die einen Tag eines Monats angibt, an dem das EPG-Ereignis startet;
- Zuweisen (203) des Wertes der Tagesvariablen zu den 5 höchstwertigen Bits der Ereignisvariablen;
- Bereitstellen (204) einer Zeitvariablen, die eine Startzeit des Ereignisses angibt, berechnet in Minuten ab Mitternacht des Tages, an dem das Ereignis startet;
- Zuweisen (205) des Wertes der Zeitvariablen zu den 11 niedrigstwertigen Bits der Ereignisvariablen; und
- Bereitstellen des Wertes der Ereignisvariablen (e) als die Ereignis-ID, die für 16-Bit-EPG-Engines lesbar ist.

2. Verfahren zum Abrufen eines Ereignisdatums und einer Ereigniszeit aus einer Ereigniskennung (ID), die eine Form einer 16-Bit-Variablen, e.id, aufweist, die nach Anspruch 1 erzeugt wird, wobei das Ereignisdatum und die Ereigniszeit innerhalb von 14 Tagen vor oder nach dem aktuellen Tag liegen, wobei das Verfahren die folgenden Schritte umfasst:
- Zuweisen eines Wertes einer Datumsvariablen (e.ds) für die Ereignis-ID durch:
o Spezifizieren (303) des Tages der Datumsvariablen (e.ds.Tag) als gleich der Ereignis-ID um 11 Bits nach rechts verschoben;
o Spezifizieren (306, 308, 313, 315) des Monats der Datumsvariablen (e.ds.Monat) und des Jahres der Datumsvariablen (e.ds.Jahr) abhängig von einem Ergebnis eines Vergleichs (305, 312) des Tages des aktuellen Datums (c.ds.Tag) mit dem Tag des Ereignisdatums (e.ds.Tag);
- und Zuweisen eines Wertes einer Zeitvariablen (e.ts) für die Ereignis-ID durch:
o Spezifizieren (310) der Stunde der Zeitvariablen als gleich ((e.id & 0x7ff)/60), der Minute der Zeitvariablen als gleich ((e.id & 0x7ff) % 60) und der Sekunde der Zeitvariable als gleich 0, wobei "&" ein bitweises UND bedeutet, "%" einen Rest einer ganzzahligen Division bedeutet, /" einen ganzzahligen Quotienten einer Division bedeutet.

3. Computerprogramm, das Programmcodemittel zum Durchführen aller Schritte des computerimplementierten Verfahrens nach Anspruch 2 umfasst, wenn das Programm auf einem Computer läuft.

4. Computerlesbares Medium, das computerausführbare Anweisungen speichert, die alle Schritte des computerimplementierten Verfahrens nach Anspruch 2 durchführen, wenn sie auf einem Computer ausgeführt werden.

5. Digitaler Fernsehempfänger (110), der eine EPG-Engine (114) umfasst, die konfiguriert ist, um 16-Bit-Ereigniskennungen zu lesen und um ein Ereignisdatum und eine Ereigniszeit von einer Ereigniskennung (ID) gemäß dem Verfahren von Anspruch 2 abzurufen.

## Revendications

1. Procédé permettant de générer un identifiant d'événement (ID) unique pour un événement dans un guide de programme électronique (EPG) permettant de préciser une date et une heure de début de l'événement, le procédé comprenant les étapes de :
- fourniture (201) d'une variable d'événement de 16 bits ayant une valeur initiale de 0;
- fourniture (202) d'une variable de jour indiquant un jour d'un mois auquel l'événement EPG commence ;
- attribution (203) de la valeur de la variable jour aux 5 bits les plus significatifs de la variable événement ;
- fourniture (204) d'une variable de temps indiquant une heure de début de l'événement, calculée en minutes à partir de minuit le jour auquel l'événement commence ;
- attribution (205) de la valeur de la variable d'heure aux 11 bits les moins significatifs de la variable d'événement ; et
- fourniture de la valeur de la variable d'événement (e) sous la forme de l'ID d'événement lisible pour les moteurs EPG 16 bits.

2. Procédé permettant de récupérer une date et une heure d'événement à partir d'un identifiant (ID) d'événement présentant la forme d'une variable de 16 bits, e.id, généré selon la revendication 1, ladite date et ladite heure de l'événement étant comprises dans un intervalle de 14 jours précédant ou suivant le jour en cours, le procédé comprenant les étapes de :
- attribution d'une valeur à une variable de date (e.ds) pour l'ID d'événement en :
∘ précisant (303) le jour de la variable de date (e.ds.day) comme étant égal à l'ID d'événement décalé vers la droite de 11 bits ;
∘ précisant (306, 308, 313, 315) le mois de la variable de date (e.ds.month) et l'année de la variable de date (e.ds.year) en fonction du résultat d'une comparaison (305, 312) du jour de la date courante (c.ds.day) au jour de la date de l'événement (e.ds.day) ;
- et attribution d'une valeur d'une variable de temps (e.ts) pour l'ID d'événement en :
∘ précisant (310) l'heure de la variable temps comme étant égale à ((e.id & 0x7ff) / 60), la minute de la variable temps comme étant égale à ((e.id & 0x7ff) % 60) et la seconde de la variable de temps comme étant égale à 0, où « & » signifie un bit ET, « % » signifie un reste d'une division entière, « / » signifie un quotient entier d'une division.

3. Programme informatique comprenant un moyen de code de programme permettant d'effectuer toutes les étapes du procédé implémenté par ordinateur selon la revendication 2 lorsque ledit programme est lancé sur un ordinateur.

4. Support lisible par ordinateur stockant des instructions exécutables par ordinateur qui effectue toutes les étapes du procédé implémenté par ordinateur selon la revendication 2 lorsqu'il est exécuté sur un ordinateur.

5. Récepteur de télévision numérique (110) comprenant un moteur EPG (114) configuré pour lire des identifiants d'événement de 16 bits et pour récupérer une date et une heure d'événement à partir d'un identifiant d'événement (ID) conformément au procédé selon la revendication 2.
